# EUROPEAN PATENT APPLICATION

(11) **EP 1 455 470 A2**
(43) Date of publication of application: **08.09.2004**
(21) Application number: 04003748.3
(22) Date of filing: 19.02.2004
(51) Int. Cl.: H04H 1/00

(54) **Content receiver and content difference transmitter in content distribution system**

(30) Priority: 20.02.2003 JP 2003043067
(71) Applicant: Hitachi, Ltd., Chiyoda-ku, Tokyo 101-8010 (JP)
(72) Inventor: Kawamata, Yukihiro, Hitachi-shi Ibaraki 319-1292 (JP); Tomobe, Osamu, Hitachi-shi Ibaraki 316-0022 (JP); Ishida, Takaharu, Hitachinaka-shi Ibaraki 312-0052 (JP)
(74) Representative: Beetz & Partner Patentanwälte

(57) **Abstract**

In order to provide a content distribution system capable of realizing a highly efficient and reliable communications method for the data not assigned with the information on the order of data, the present invention provides a content difference transmitter in a content distribution system comprising a content broadcasting device 2 for broadcasting the broadcast contents according to the time of a predetermined broadcasting program; a content difference transmitter 3 for transmitting differential contents; and a content receiver 1 for receiving differential contents, thereby complementing the broadcast contents that cannot be received. The aforementioned content receiver 1 is characterized by having means for sending differential content transmission request including communications cut-off time to the content difference transmitter 3. The aforementioned differential content transmission request can be incorporated in the content data received from the content broadcasting device 2.

## Description

### BACKGROUND OF THE INVENTION

The present invention relates to the content receiver and content difference transmitter in a content distribution system.

Broadcasting and distribution of music contents through broadcasting networks based on digital broadcasting satellites and the like, and communications networks based on cellular phones are planned or implemented by various business entities in recent years. One-to-one communication form and one-to-many communication form are known as a communications form of the network for such content communications.

The one-to-many broadcasting infrastructure permits simultaneous transmission of a large amount of data to many users. Thus, when one wishes to distribute large-sized data such as music contents, the broadcasting infrastructure for one-to-many communication provides efficient data distribution, but is not capable of separately handling the communications failure due to data loss or the like.

The one-to-one communication infrastructure, on the other hand, is capable of separately handling the communications failure due to data loss or the like, and ensures reliable communications. However, the communications cost for each terminal is increased since data is handled separately. It should be noted that the communications infrastructure refers to a network based on a cellular phone and a personal handy phone system (PHS).

In the information distribution method, information reception method, information distribution system, information distribution apparatus receiving terminal and storage medium (Patent Document 1) proposed by the present applicant, data is acquired by one-to-one correspondence for the portion where data is lost due to the one-to-many communications. This arrangement provides the advantage of sending a large amount of data in the one-to-many communication, as well as the advantage of complementing data reliability in the one-to-one communication.

### [Patent Document 1]

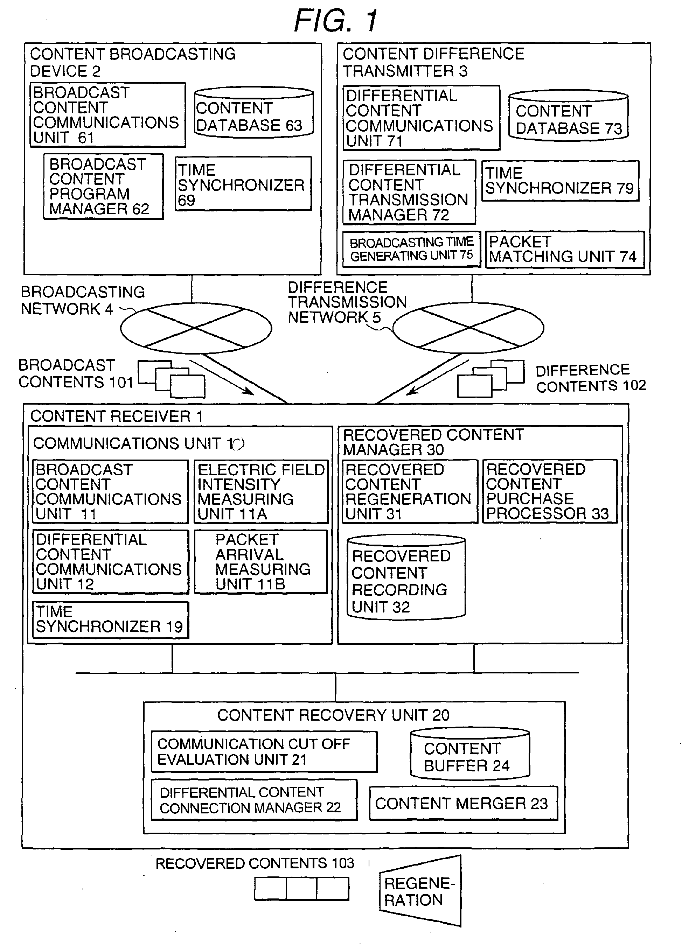

Japanese Application Patent Laid-Open Publication No. 2002-77856 (Fig. 1, for example)

According to the method disclosed in Patent Document 1, the serial numbers assigned to data are used in the process of detecting the loss of data in the one-to-one communication mode. For example, when the content receiver has received "100th", "101st" and "103rd" on a continuous basis in the one-to-many communication mode, the content receiver finds out the loss of data corresponding to "102nd" data. This method complements the reliability of the data assigned with the information on data sequence such as serial numbers. In the one-to-many communication, however, a great deal of distributed data is not assigned with information on data sequence. There is a large demand for a communications method that ensures highly efficient and reliable communications of the data not assigned with information on data sequence.

### SUMMARY OF THE INVENTION

In view of the prior art described above, it is an object of the present invention to provide a content distribution system that realizes a highly efficient and reliable communication method. Another object will be described later.

The present invention has been made to achieve the aforementioned object. In the aforementioned content receiver of the content distribution system comprising a content broadcasting device for broadcasting the broadcast contents according to a predetermined broadcast program time; a content difference transmitter for transmitting differential contents; and a content receiver that receives differential contents to complement the broadcast content that cannot be received, the aforementioned content receiver is characterized by further containing means for sending to the content difference transmitter the differential content transmission request signal including the communications cut-off time period. Such an arrangement provides a content distribution system that realizes a highly efficient and reliable communication method for the data not assigned with information on data sequence. Another solving means will be described in detail by the following preferred embodiments.

### BRIEF DESCRIPTION OF THE DRAWINGS

Fig. 1 is a block diagram representing a content distribution system as an embodiment of the present invention;
Fig. 2 is a diagram representing a content database for storing the contents transmitted by a content broadcasting device and content difference transmitter as an embodiment of the present invention;
Fig. 3 is a diagram representing a content buffer as an embodiment of the present invention;
Fig. 4 is a diagram representing a differential content transmission request as an embodiment of the present invention;
Fig. 5 is a flowchart outlining the content reception as an embodiment of the present invention;
Fig. 6 is a flowchart showing the content reception as an embodiment of the present invention, with particular attention given to the operation of the content receiver;
Fig. 7 is a flowchart showing the processing of differential content transmission request as an embodiment of the present invention; and
Fig. 8 is a diagram representing the processing of evaluation of communications cut-off as an embodiment of the present invention.

### DETAILED DESCRIPTION OF THE PREFERRED EMBODIMENT

The following describes the details of the preferred embodiments of a content distribution system according to the present invention, with reference to drawings: In the first place, the arrangement of the content distribution system as a preferred embodiment will be described with reference to Fig. 1.

The content distribution system shown in Fig. 1 has a function of distributing contents to a user. The contents distributed here include music data, video data and text data. These contents are divided into multiple packets and are distributed. Especially in the digital broadcasting, contents are distributed as a transport stream consisting of multiple PES packets. In some cases, music is distributed in the form of a bit stream based on the ADTS packets of the MPEG-2 ACC. Thus, the content distribution system consists of:
a content receiver 1 for presenting contents to a user by receiving and regenerating the stream data of the contents;
a content broadcasting device 2 for distributing contents according to a predetermined broadcasting program time;
a content difference transmitter 3 for transmitting contents to the content receiver 1;
a broadcasting network 4 for enabling transmission of data to multiple terminals; and
a difference transmission network 5 for enabling transmission of data to a specific terminal. The broadcasting network 4 connects the content broadcasting device 2 with the content receiver 1, and the difference transmission network 5 connects the content difference transmitter 3 with content receiver 1. The broadcasting network 4 and difference transmission network 5 is composed, for example, of the space that radio waves can reach in radio communications. The following description of the embodiments is based on a content distribution system where the digital broadcasting network is used as the broadcasting network 4, and the cellular phone is used as the difference transmission network 5.

The following description outlines the processing of the contents in the content distribution system shown in Fig. 1. In the first place, the content receiver 1 is exemplified by terminal equipment mounted on a mobile unit such as a car. The contents distributed from the content broadcasting device 2 through the broadcasting network are received as broadcast contents 101. This content broadcasting device 2 includes a digital ground wave broadcasting station and a satellite broadcasting facility including a communications satellite. However, when radio broadcasting is used for the broadcasting network 4, part of the packets cannot be received correctly, because cut-off or sampling of radio waves are caused by the high-rise buildings facing the traveling route or the surrounding topographic features, in conformity to the movement of the content receiver 1 or radio waves are interrupted by reflected waves, with the result that the information distributed from the content broadcasting device 2 is gradually subjected to momentary interruption. The portion of the broadcast contents 101 that cannot be received due to such temporary communications interruption of the broadcasting network 4 are received by the content receiver 1 from the content difference transmitter 3. The contents received in this manner are used as differential contents 102. Further, the content receiver 1, by merging the broadcast contents 101 with differential contents 102, creates recovered contents 103. The content receiver 1 regenerates and records the recovered contents 103. This content difference transmitter 3 is a kind of information distribution center. Any form of this equipment can be used if information can be sent through the transmission line different from that of the content broadcasting device 2.

The following describes the devices constituting the content distribution system according to the present invention: The content broadcasting device 2 has a function of distributing the broadcast contents 101 in conformity to a predetermined broadcasting program time. Accordingly, the content broadcasting device 2 consists of:
a broadcast content communications unit 61 as an interface for distributing the broadcast contents 101 to the broadcasting network 4;
a broadcast content program manager 62 for controlling the broadcast contents 101 conforming to a predetermined broadcasting program time;
a content database 63 for storing the contents; and
a time synchronizer 69 for synchronizing the time managed inside the content broadcasting device 2 with a predetermined time.

The content difference transmitter 3 has a function of transmitting the differential contents 102 to the content receiver 1. Thus, the content difference transmitter 3 consists of:
a differential content communications unit 71 as an interface for distributing the differential contents 102 to the difference transmission network 5;
a differential content transmission manager 72;
a content database 73 (contents DB) for storing the contents;
a time synchronizer 79 for synchronizing the time managed inside the content difference transmitter 3 with a predetermined time;
a packet matching unit 74 for obtaining the data starting position of the required differential content; and
a broadcasting time generating unit 75. It is preferred that at least part of the difference transmission network 5 be composed of different communications means, in order to eliminate the possibility of being affected concurrently by the communications cut-off occurring to the broadcasting network 4.

This content difference transmitter 3 is characterized by the function of receiving the differential content transmission request including the information on communications cut-off time from the content receiver 1, and the function of sending the differential content subsequent to the broadcasting time corresponding to the communications cut-off time included in the differential content transmission request, to the content receiver 1 as a source of differential content transmission request. It is also characterized by having the means that, when the size of the packet sent in broadcasting is sufficient small, searches the content database 73 (content DB) contained in the content difference transmitter 3, around communications cut-off time, to find out the packets matching more than one packet, without including any wrong information, received prior to the communications cut-off included in the differential content transmission request, at the time sufficiently close to the time of communications cut-off. It also has the means for sending the differential content subsequent to the broadcasting time corresponding to the matching contents, to the content receiver 1 as a source of differential content transmission request.

The packet matching unit 74 provides pattern matching between the packets incorporated in the differential content transmission request and those included in the content database 73. This is because the following cases can be assumed: Namely, even when the times inside the content difference transmitter 3, content broadcasting device 2 or content receiver 1 have been synchronized by the time synchronizer 79, and the time of the detection of momentary interruption is known to the content receiver 1, there is no guarantee that the packets that cannot be received by the content receiver 1 due to the interruption are the same as those sent by the content broadcasting device 2 at the time of detection of that momentary interruption, because of communications delay and other reasons. Accordingly, even if the time of the detection of momentary interruption is merely reported to the content difference transmitter 3, it is assumed that the missing packets cannot be received in some cases. To solve this problem, at least one of the packets correctly received at the time sufficiently close to the time when communications cut-off has occurred (preferably, the ones correctly received immediately before interruption) is sent to the content difference transmitter 3 as a mark showing the differential content transmission startup position. Using the information on communications cut-off time contained in the differential content transmission request signal, pattern matching is carried out by mainly selecting the packets broadcast close to that time, thereby searching the matched packets. The leading position of the differential contents can be found out using these matched packets found out in this manner. The packets contained in the differential content transmission request are correctly received ones. Their number may be one, or more than one as in the case of a collection of multiple packets. For example, the differential contents are specified from the time of communications cut-off in the case of long-sized having a time length of 5 seconds. When the content data is sufficiently short, for example, when the data is very short as in the case of the ADTS frame in digital television broadcasting or sound broadcasting, the content data (ADTS frame) at the time of communications cut-off, as well as immediately before communications cut-off is used to carry out the processing of searching the same content data in the packet matching unit 74.

As described above, pattern matching is carried out by the packet matching unit 74 between the packets contained in the differential content transmission request and those of the content database. This arrangement provides a data complement on the packet level when the content data is very short (several tens of msec.).

The content data, transmitted by broadcasting, obtained from the content broadcasting device 2 almost concurrently as the transmission time, is assigned with the time synchronized with the time managed by the content broadcasting device 2, by the broadcasting network 75. This is because of the following reasons:
Transmission time is not assigned to the packets sent by broadcasting of the content broadcasting device 2. Accordingly, in the content database 73, the packets sent by the content broadcasting device 2 and the time of the transmission of these packets are obtained from the content broadcasting device 2, and information on the packet is assigned with the time of transmission. Then the resulting information is placed into storage.

Further, the content receiver 1 has the function of receiving and regenerating the contents, and presenting them to users. Accordingly, the content receiver 1 consists of:
a communications unit 10 as an interface for exchanging contents and other data with other terminals;
a content recovery unit 20 for generating recovered contents 103 by merging the broadcast contents 101 with differential contents 102; and
a recovered content manager 30 for regenerating and recording the recovered contents 103. Especially the content receiver 1 is characterized by having the means that, when the packets sent by broadcasting have a small size, sends the time of communications cut-off and the content transmission request including one or more packets, without containing any wrong information, received prior to communications cut-off and sufficiently close to the time of communications cut-off.

The communications unit 10 contains:
a broadcast content communications unit 11 as an interface for communications with the content broadcasting device 2 through the broadcasting network 4;
a differential content communications unit 12 as an interface for communications through the content difference transmitter 3 and difference transmission network 5;
an electric field intensity measuring unit 11A for measuring the intensity of electric field as a communications state of the broadcast content communications unit 11;
a packet arrival measuring unit 11B for measuring the arrival of the packet as an communications state of the broadcast content communications unit 11; and
a time synchronizer 19 for receiving time information from other terminals and reflecting it in the time data stored in the content receiver 1. This time synchronizer 19 is used for time synchronization with the content difference transmitter 3, prior to the start of the content data complementing service.

The content recovery unit 20 contains
a communications cut-off evaluation unit 21 for evaluation to check if communications with the content broadcasting device 2 have been cut off or not;
a differential content connection manager 22 for managing the connection of communications with the content difference transmitter 3;
a content merger 23 for the broadcast contents 101 with differential contents 102 to generate the recovered contents 103; and
a content buffer 24 for temporary storage of the received broadcast contents 101 and differential contents 102.

The recovered content manager 30 contains:
a recovered content regeneration unit 31 for regenerating the recovered contents 103;
a recovered content recording unit 32 for recording the recovered contents 103; and
a recovered content purchase processor 33 for processing the user's purchase of the recovered contents 103 recorded on the recovered content recording unit 32.
The components of the content receiver 1 have been described above.

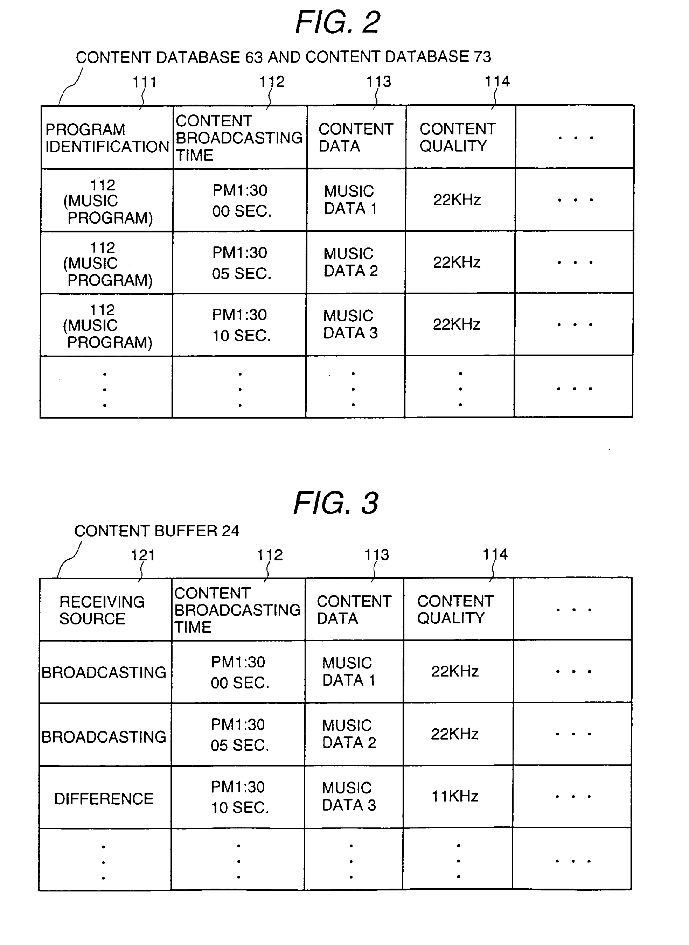

The following describes the data processed by the content distribution system as an embodiment of the present invention, with reference to Figs. 2 through 4:

Fig. 2 is a drawing representing the content database storing the contents sent by the content broadcasting device 2 and content difference transmitter 3. The content database 63 is formed in the content broadcasting device 2, and the content database 73 is located in the content difference transmitter 3. In the content database 63 and content database 73, one program is managed as a set of multiple pieces of content data. Each piece of content data is assigned with each broadcast time. Accordingly, the content database 63 and content database 73 include program identification 111 for identification of content programs, a content broadcast time 112, a content data 113 and a content quality 114.

The content quality 114 is defined as the quality of the content data 113. For example, it refers to the sampling rate when the content data 113 is music data. Accordingly, a set of content data 113 representing multiple different content qualities 114 can be stored in the content database 63 and content database 73. The content data 113 representing multiple content qualities 114 for the same broadcast time in one program can be stored in the content database 63 and content database 73.

Fig. 3 is a drawing representing a content buffer 24. The content buffer 24 temporarily stores the received contents (broadcast contents 101 and differential contents 102). Accordingly, the content buffer 24 contains a receiving source 121 for specifying the content receiving source (content broadcasting device 2 or content difference transmitter 3), a content broadcasting time 112, a content data 113 and a content quality 114. The content broadcasting time 112 in the content buffer 24 refers to the time when the content receiver 1 receives the broadcast contents 101 from the content broadcasting device 2, or the time of broadcasting assigned to the differential contents 102 received from the content difference transmitter 3 by the content receiver 1.

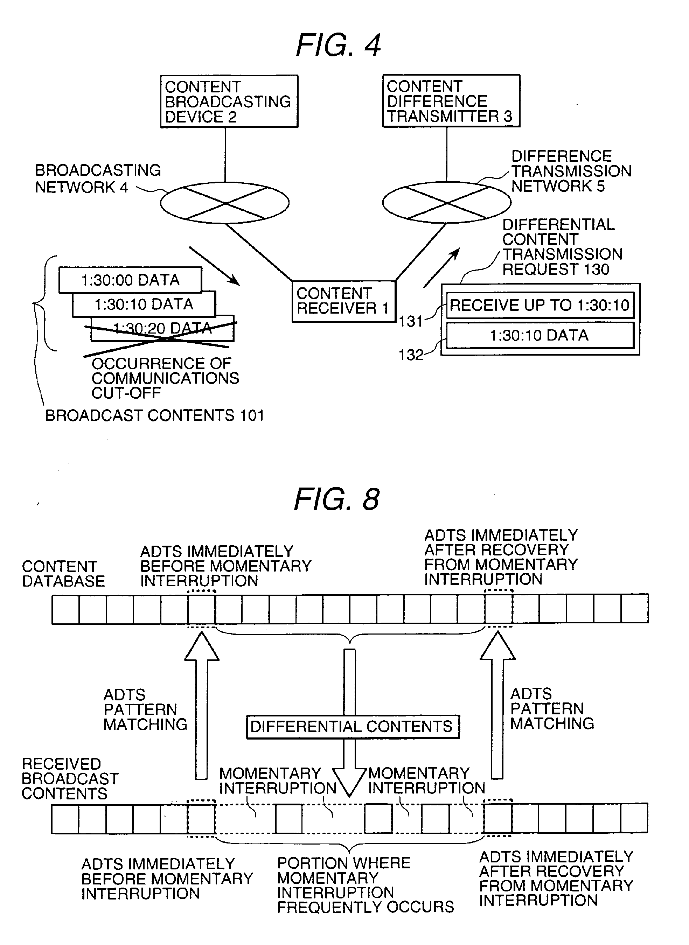

Fig. 4 is a drawing representing the differential content transmission request 130. In the first place, the content receiver 1 detects that communication with the content broadcasting device 2 has been cut off. Then in order to receive contents from the content difference transmitter 3 instead of the content broadcasting device 2, the content receiver 1 creates the differential content transmission request 130 including the communication cut-off time 131 and sends it to the content difference transmitter 3. To ensure that the processing of correction for improvement of the accuracy of the communication cut-off time 131 is carried out by the content difference transmitter 3, the content receiver 1 may permit the communications cut-off data 132 to be included in the differential content transmission request 130. To put it more specifically, as shown in Fig. 4, assume that communications cut-off has occurred when the content receiver 1 is receiving "1:30:00 data", "1:30:10 data" and "1:30:20 data" as broadcast contents 101 in chronological order, and the "1:30:20 data" has been lost. Then the content receiver 1 creates a differential content transmission request 130 by assuming that the time of receiving the data having received prior to the communications cut-off (e.g. 1:30:10 data") is the communication cut-off time 131, and the data having received prior to the communications cut-off is the communications cut-off data 132.

The above has described the configuration of the content distribution system as an embodiment of the present invention. The following describes the operation of the content distribution system as an embodiment of the present invention, with reference to Figs. 1 and 4:

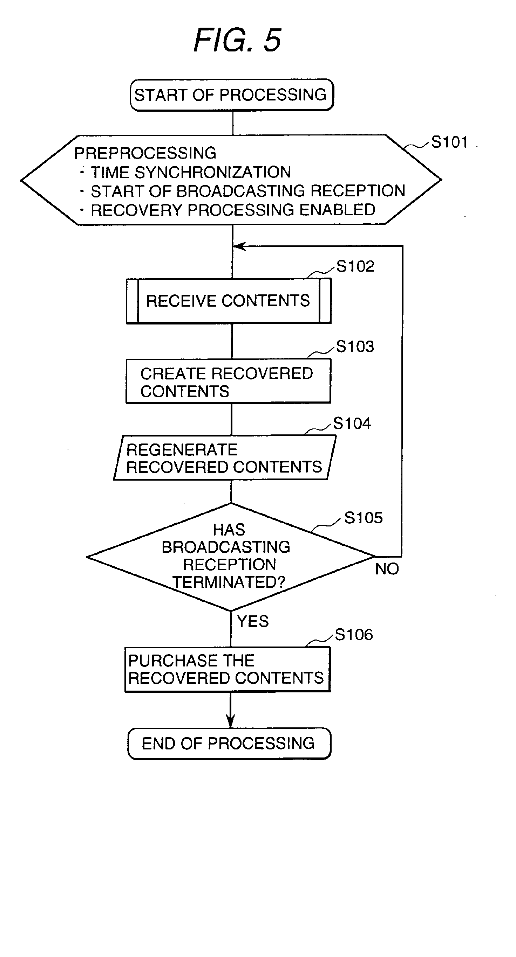

The following outlines the process of content receiving with reference to Fig. 5: Fig. 5 is a flowchart with attention given to the operation of the content receiver 1.

The following describes the preprocessing for content reception (S101). The preprocessing consists of:
processing of time synchronization wherein the times among devices constituting the content distribution system are synthesized;
start of broadcast reception for the content receiver 1 receiving the broadcast contents 101 issued from the content broadcasting device 2; and
processing of enabling the recovery process wherein the content receiver 1 permits the differential contents 102 to be received from the content difference transmitter 3. The following specifically describes the each step contained in preprocessing:

The processing of time synchronization in the preprocessing (S101) is the step of synchronizing the times among various devices constituting the content distribution system. The content receiver 1 adjusts the time managed by the content receiver 1, to a predetermined time. Time synchronization is the step wherein the predetermined time managed by the time management server (not illustrated) is received through a time synchronizer 19 and is reflected on the time managed by the content receiver 1. In the content broadcasting device 2, the predetermined time obtained from the time managing server through the time synchronizer 69 is set on the content broadcasting device 2. Further, in the content difference transmitter 3, the predetermined time obtained from the time managing server through the time synchronizer 79 is set on the content difference transmitter 3. This arrangement allows the content receiver 1, content broadcasting device 2 and content difference transmitter 3 to share the predetermined time, with the result that times among various devices are synchronized. Another method can be used as follows: Time is synchronized in advance between the content broadcasting device 2 and content difference transmitter 3 by the time synchronizer 69 and time synchronizer 79. Then before the missing data complementing service starts, time is synthesized with the time synchronizer 79 of the content difference transmitter 3 at the request from each content receiver 1. When this method is used, mutual times can be synchronized between each content receiver 1 and content difference transmitter 3, without the need of installing a specific time managing server.

Processing of the start of broadcast reception in the preprocessing (S101) is the step of the content receiver 1 receiving the broadcast contents 101 issued from the content broadcasting device 2. The broadcast content program manager 62 of the content broadcasting device 2 broadcasts the contents stored in the content database 63 to the broadcasting network 4 through the broadcast content communications unit 61 according to the content broadcasting time 112. For example, when the power of the content receiver 1 has been turned on by the user, the content receiver 1 starts the processing for the reception of the broadcast contents 101 being broadcast by the broadcasting network 4 through the broadcast content communications unit 11.

The processing for enabling the recovery process in the preprocessing (S101) is the step wherein the content receiver 1 permits the differential contents 102 to be received from the content difference transmitter 3. For example, when the Start button (not illustrated) of the differential content service attached to the content receiver 1 has been pressed, the content receiver 1 receives the differential contents 102 from the content difference transmitter 3 in response to the communications state of the broadcasting network 4. The user can set the enable/disable status of the differential content service (corresponding to the End button of differential content service not illustrated) at any desired time by using this Start button of differential content service. In this case, if the differential content service is disabled when the Start button of differential content service has been pressed, processing is carried out to enable time synchronization and recovery processing in the preprocessing S101. If the differential content service is enabled, processing is carried out to disable recovery processing. When the contents of greater interest to a user have been subjected to momentary interruption of communications, this arrangement makes it possible to receive the differential contents on a selective basis. It is also possible to arrange such a configuration that, when selecting the enable/disable status of the differential content service, the content receiver 1 allows the user to make confirmation of the selection. Alternatively, it is also possible to make such arrangements that information showing the selection of the enable/disable status of the differential content service is indicated on the display unit of the content receiver 1. The following description is based on the assumption that the differential content service is enabled. Preprocessing (S101) has been described above.

The following describes the reception of contents (S102). The content receiver 1 receives contents from the content broadcasting device 2 and content difference transmitter 3 and stores them in a content buffer 24. In this case, the content receiver 1 adds information for identifying the content broadcasting device 2 or content difference transmitter 3 as a content receiving source 121. Further, the content receiver 1 uses the time of receiving the contents as the content broadcasting time 112 when the contents have been received from the content broadcasting device 2, on the one hand. On the other hand, the content receiver 1 uses the broadcast time attached to the contents as content broadcasting time 112 when the contents have been received from the content difference transmitter 3.

The following describes the procedure of creating the recovered contents (S103): The content recovery unit 20 of the content receiver 1 merges the contents of different receiving source 121 stored in the content buffer 24. The resulting contents are used as the recovered contents 103. Accordingly, a content merger 23 rearranges the contents stored in the content buffer 24 in order of broadcast time. The content merger 23 specifies the recovered contents 103 if the broadcast contents 101 and differential contents 102 are present in the same broadcast time. In this case, the recovered contents 103 can be specified by selecting the contents having the higher content quality 114 or selecting the differential contents 102 at all times. It is also possible to make such arrangements that the content receiver 1 provides the method for selecting multiple recovered contents 103 so that the user makes the final selection. Thus, the content recovery unit 20 creates the recovered contents 103 at each broadcasting time, without missing any. The created recovered contents 103 are transferred to the recovered content manager 30 from the content recovery unit 20.

The following describes the regeneration of the recovered contents (S104): The recovered content manager 30 uses the recovered content regeneration unit 31 to regenerate the recovered contents 103 created by the content recovery unit 20. Regeneration by the recovered content regeneration unit 31 is sound output from a speaker as the recovered content regeneration unit 31, for example, when the recovered contents 103 are music data. The regenerated recovered contents 103 are recorded in the recovered content recording unit 32. As described above, a series of processing from reception of contents (S102) to regeneration of recovered contents (S104) is repeated until reception of broadcasting ends (No in S105).

When broadcast reception has terminated (Yes in S105) upon change of the broadcast channel by the user, the recovered content manager 30 can be configured to start the processing of allowing the user to purchase the recovered contents 103 stored in the recovered content recording unit 32 (S106). The processing of purchase is the step of the recovered contents 103 being written into the storage medium (not illustrated) inserted into the content receiver 1, by the recovered content purchase processor 33, for example, upon reception of a content purchase confirmation signal sent from the content difference transmitter. If the content quality 114 of the recovered contents 103 fails to meet a predetermined level in this case, the content receiver 1 can be configured to receive the differential contents 102 after termination of broadcasting. In this case, however, the packet transmission start time and transmission termination time placed under the control of the content difference transmitter 3 have already been known. Accordingly, when retransmission of differential contents of high quality is requested, there is no need of sending the packet for pattern matching that is carried out when transmission of complementary data is required.

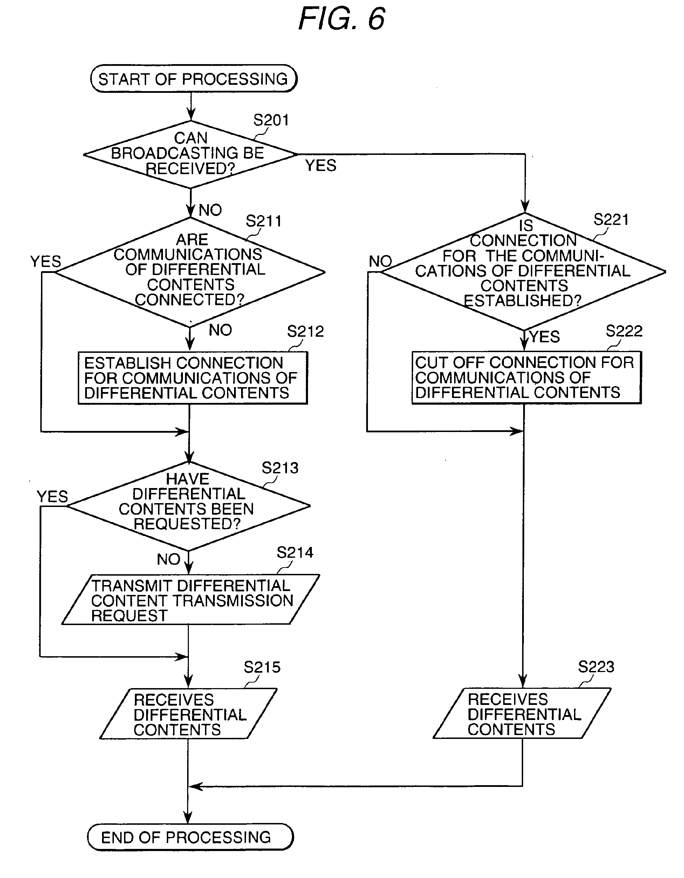

The above has outlined the processing of the content reception with reference to Fig. 5. Of the processing shown in Fig. 5, the reception of contents (S102) will be described more specifically with reference to Fig. 6. Fig. 6 is a flowchart with major attention paid to the operation of the content receiver 1.

The communications cut-off evaluation unit 21 evaluates the broadcast content communications unit 11 to see if it can receive broadcast contents 101 (S201). In this case, this evaluation can be made by an electric field intensity measuring unit 11A or packet arrival measuring unit 11B. According to the method of evaluation using the electric field intensity measuring unit 11A, communication is evaluated as being cut-off if the electric field intensity has not yet reached a predetermined level, when the broadcast content communications unit 11 is based on radio communications.

According to the method using the packet arrival measuring unit 11B, communication is evaluated as being cut-off if the packet as broadcast contents 101 has not yet arrived. In this case, if the packet is not sent for more than a predetermined time, the transmission time contained in the packet is discontinuous or other phenomenon indicative of information cut-off has been detected, failure of packet arrival is determined. In this case, if the correct reception and incorrect reception of the packet have been repeated during the period of several seconds through several tens of seconds, the period of incorrect reception can be regarded as a communications cut-off period; hence, communication is evaluated as being cut-off during this time (see Fig. 8). When such a packet error has occurred, a longer processing time will be required for differential request and differential merging, with the result that reception of differential data packets may not catch up with the processing of regeneration at the reception terminal. To cope with intermittent occurrence of momentary interruption, recovery from momentary interruption is regarded as having been achieved if packets have been received continuously for a predetermined number of times immediately after recovery from the momentary interruption. This arrangement makes it possible to regard intermittent occurrence of momentary interruption as a continuous packet loss, and allows the processing of packet complementing to be carried out by one differential request.

The communications cut-off evaluation unit 21 uses either of the aforementioned two methods or a combination thereof to determine if the broadcast content communications unit 11 is in the state of communications cut-off-or not.

The following describes the case where the broadcast contents 101 can be received (Yes in S201): In the first place, the differential content connection manager 22 checks the connection for communications of differential contents (S221). Here the connection for communications of differential contents is used for communications of differential contents 102 through the difference transmission network 5 between the content receiver 1 and content difference transmitter 3. It is realized, for example, by access to the Internet, for example, according to TCP/IP. If there is a connection for communications of differential contents (Yes in S221), the broadcast contents 101 can be received, differential contents need not be received; hence no need of making a connection for communications of differential contents. Thus, the differential content connection manager 22 cuts off the connection for differential content communications (S222). The content receiver 1 uses the broadcast content communications unit 11 to receive the broadcast contents 101 from the content broadcasting device 2 (S223).

When differential content communication is to be carried out through line switching of the public line network, billing according to the time of connection will be disabled by turning off the connection for differential content communications (S222). In the case of the packet where billing is not carried out if there is no data exchanged, billing is not made according to the time of connection, so this processing of disconnection need not be carried out. To put it another way, the communications network for exchange of differential contents is configured in a billing system independent of the time of connection, the communications for differential contents need not be disconnected. In this case, there is no need of checking if communications of differential contents are connected or not (S221). Once communications are cut off, much time may be required to reestablish connection. Thus, when the differential contents are to be requested again, it is possible to reduce the time for reestablishing connection.

The following describes the case where the broadcast contents 101 cannot be received or intermittent reception failure continues (No in S201): The differential content connection manager 22 checks if communications of differential contents are connected or not (S211). If communications of differential contents are not connected (No in S221), it is necessary to receive the differential contents 102 instead of the broadcast contents 101. Thus, the differential content connection manager 22 establishes a connection for communications of differential contents between the content difference transmitter 3 and the same (S212). As described above, however, there is no need for establishing the connection for communications of differential contents (S212), if connection for communications of differential contents is to be continued during the time period from establishment of the connection for communications of differential contents to processing of communications cut-off by such an operation as turning off of the power supply.

When the differential content transmission request is not yet sent to the content difference transmitter 3 (No in S213), the content recovery unit 20 uses the differential contents 102 to make up for part of the broadcast contents 101 that cannot be received due to communications cut-off from the content broadcasting device 2. For this purpose, the content recovery unit 20 creates the differential content transmission request 130 from the broadcast contents 101 prior to the communications cut-off stored in the content buffer 24, and sends it to the content difference transmitter 3 (S214). The content receiver 1 receives differential contents from the content difference transmitter 3 where connection for communications has been established (S215).

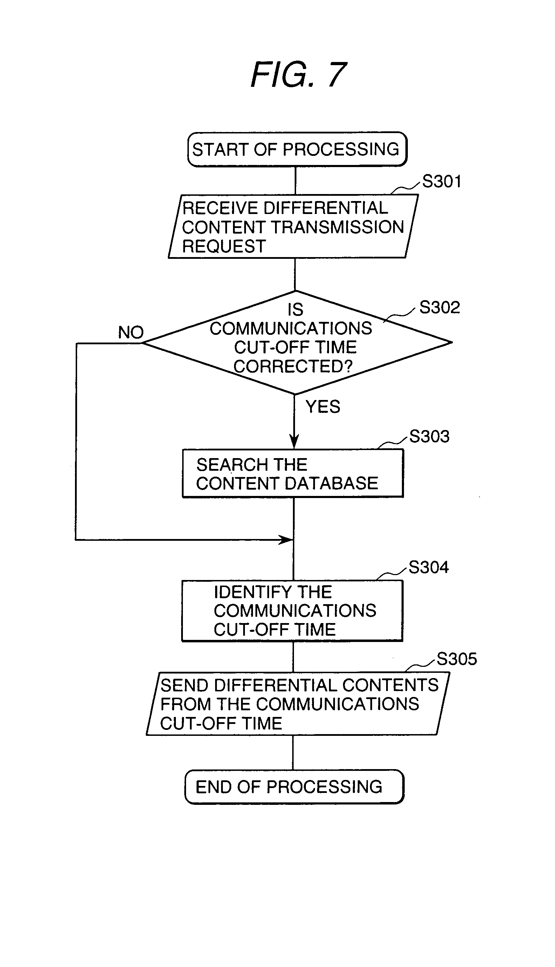

Reception of contents (S102) has been described with reference to Fig. 6. The following uses Fig. 7 to describe the processing of the content difference transmitter 3, ranging from the transmission of the differential content transmission request in Fig. 6 (S214) to reception of differential content (S215). Fig. 7 is a flowchart with major attention given to the operation of the content difference transmitter 3.

In response to transmission of the differential content transmission request 130 from the content receiver 1 (S214), the content difference transmitter 3 uses the differential content communications unit 71 to receive the request (S301).

When identifying the communications cut-off time of the content receiver 1, the content difference transmitter 3 determines if processing of correction using the communications cut-off data 132 should be carried out or not (S302). Evaluation is made not to carry out processing of correction if the communications cut-off data 132 is not incorporated in the differential content transmission request 130. Alternatively, evaluation is made not to carry out processing of correction if the number of connections for communications handled by the content difference transmitter 3 is greater than a predetermined number.

If evaluation has been made to carry out the processing of correction (Yes in S302), correction of the communications cut-off time is performed by searching the content database (S303). To put it more specifically, the packet matching unit 74 of the content difference transmitter 3 searches the content data 113, this is the same as the communications cut-off data 132, from the content data 113 stored in the content database 73, using the communications cut-off data 132 as the key. The communications cut-off data 132 and content data 113 can be a packet set wherein the broadcasting contents are divided into the units each being slightly smaller than one second, or packets having a length of several tens of msec. This searching is carried out by pattern matching between the communications cut-off data 132 and content data 113 by the packet matching unit 74. If the same content data 113 as the communications cut-off data 132 has been found out, the time subsequent to the content broadcasting time 112 corresponding to the content data 113 is used as communication cut-off time 131. When the content database 73 is searched, it is highly probable that the same content data 113 as the communications cut-off data 132 is located nearby if search is started from the position close to the communication cut-off time 131 added to the differential content transmission request 130. This procedure reduces search time.

In the content difference transmitter 3, the communication cut-off time 131 contained in the differential content transmission request 130 or the communication cut-off time 131 having been subjected to correction by search of the content database (S303) is identified as the communications cut-off time (S304). The differential contents 102 are sent to the content receiver 1 in chronological order, starting from the contents corresponding to the communications cut-off time (S305). Then the content receiver 1 receives the differential contents 102 (S215).

One embodiment of the present invention has been described. The present invention provides a content distribution system capable of realizing a highly efficient and reliable communications method for the data not assigned with the information on the order of data.

The present invention can be embodied in numerous variations without departing from the spirit of the invention.

The recovered content manager 30 for regenerating the received contents is configured to be located inside the content receiver 1. It is also possible to arrange such a configuration that the recovered content manager 30 is a separate device independently of the content receiver 1, wherein they are each connected via the communications line.

In the disconnection of communications for differential contents (S222), connection of communications for differential contents is established upon recovery of connection for communications of the broadcasting network 4. According to this configuration, in cases where communications disconnection and recovery of connection frequently occur, loads on the content difference transmitter 3 will be increased if the connection for communications of differential contents is frequently established or cut off. Thus, it is also possible to arrange such a configuration that connection for communications of differential contents is cut off (S222) when the communications recovery has been stabilized. Stabilization of the communications recovery in this case includes the cases where packets of a predetermined number can be received on a continual basis or the predetermined intensity of radio waves continues for a predetermined period of time.

It is also possible to make such arrangements that, in order to collectively complement the portion of frame data subjected to momentary interruption and hence packet loss, the ADTS frame immediately before momentary interruption and ADTS frame immediately after momentary interruption are sent from the content receiver 1 to the content difference transmitter 3, thereby specifying the destination of the complement data. In this case, it is also possible to make such arrangements that the transmission start/end positions of the differential contents to be sent are searched by the packet matching unit 74, and differential contents are collectively sent to the content receiver 1.

Switching between reception of differential contents (S215) and reception of broadcast contents (S223) is performed, according to the evaluation of whether or not broadcasting can be received (S201). It is also possible to make such arrangements that reception of differential contents and reception of broadcast contents are carried out in parallel. In this case, for termination of the communications of differential contents, the differential content termination position is notified to the content difference transmitter 3 by specifying the ADTS frame immediately after momentary interruption.

In the network used for communications of contents, it is also possible to add the step of compressing the data on the transmitting side and decompressing the compressed data on the receiving side.

If there is any delay in the transmission of the broadcast contents 101, the content receiver 1 can allow the delay time for transmission to be subtracted from the time of reception, and the resulting time can be used as the content broadcasting time 112.

The present invention provides a content distribution system capable of realizing a highly efficient and reliable communications method for the data not assigned with the information on the order of data.

## Claims

1. A content receiver (1) comprising:
broadcast receiving means (1) for receiving broadcast contents (101); and
difference communication means for sending a differential content transmission request (130) to a content difference transmitter (3) if reception of contents broadcast by said broadcast receiving means is disabled, and for receiving the differential contents in response to the request;
wherein the broadcast contents that cannot be received are complemented by reception of differential contents;
said content receiver (1) further **characterized in that** the request for the content difference transmitter (3) includes the request for transmission of the broadcast content communications cut-off time, and the differential contents from the time corresponding to said communications cut-off time is received from said content difference transmitter (3).

2. The content receiver (1) according to Claim 1 **characterized in that** said differential content transmission request (130) includes the content data received prior to communications cut-off.

3. The content receiver according to Claim 1 or 2 **characterized in that** the instruction to stop the reception of said differential contents is sent to said content receiver (1), upon stabilization of the communications state from said content broadcasting device (2) to said content receiver (1).

4. The content receiver according to any one of Claims 1 through 3 **characterized in that** said content receiver (1) comprises means for allowing a user to purchase received contents.

5. The content receiver according to Claim 4 **characterized in that**, when the contents to be purchased by a user have not reached a predetermined quality level, said content receiver (1) receives the contents of higher quality to provide a complement.

6. A content difference transmitter in a content distribution system comprising:
a content broadcasting device for broadcasting the broadcast contents according to the time of a predetermined broadcasting program;
a content difference transmitter for transmitting differential contents; and
a content receiver (1) for receiving differential contents, thereby complementing the broadcast contents that cannot be received;
said content difference transmitter (3) further **characterized by** receiving receives a differential content transmission request (130) from said content receiver (1) and by sending to said content receiver (1) the differential contents subsequent to the broadcasting time corresponding to the communications cut-off time contained in said differential content transmission request.

7. The content difference transmitter according to Claim 6 **characterized in that** said content difference transmitter searches the content database (73) contained in said content difference transmitter (3) to find out the contents matching the content data received prior to said communications cut-off, and sends to said content receiver (1) the differential contents, subsequent to the broadcasting time, corresponding to the said matching contents.
